# EUROPÄISCHE PATENTSCHRIFT

(11) **EP 3 222 978 B1**
(45) Veröffentlichungstag und Bekanntmachung des Hinweises auf die Patenterteilung: **03.04.2019**
(21) Anmeldenummer: 16168263.8
(22) Anmeldetag: 04.05.2016
(51) Int. Cl.: G01F 15/18, G01F 1/66, G01F 1/684, G01F 25/00, G01F 5/00

(54) **MESSVORRICHTUNG ZUR ERFASSUNG EINES FLUIDFLUSSES MIT FEHLERERKENNUNG**
FLOW METER WITH ERROR DETECTION
APPAREIL DE MESURE DE DÉBIT DOTÉ D'UNE RECONNAISSANCE D'ERREURS

(30) Priorität: 24.03.2016 DE 102016105553
(43) Veröffentlichungstag der Anmeldung: 27.09.2017
(73) Patentinhaber: Elster GmbH, 55252 Mainz-Kastel (DE)
(72) Erfinder: TEMME, Guido, Herr, 49186 Bad Iburg (DE); MATTER, Daniel, Herr, 5200 Brugg (CH); SABBATTINI, Bruno, Herr, 8006 Zürich (CH)
(74) Vertreter: Zenz Patentanwälte Partnerschaft mbB

(56) Entgegenhaltungen:
- EP-A1- 2 703 787
- EP-A2- 0 082 484
- WO-A1-97/38287
- WO-A1-2004/092687
- DE-A1-102004 019 521
- US-A1- 2008 250 854

## Beschreibung

Die Erfindung betrifft eine Messvorrichtung zur Erfassung eines Fluidflusses mit Fehlererkennung. Insbesondere betrifft die Erfindung ein Durchflussmessgerät für Fluide, mit dem eine charakteristische Größe eines Fluidstromes bestimmt wird.

Durchflussmessgeräte dienen im Allgemeinen dazu, den Durchfluss eines fluiden Mediums, beispielsweise einer Flüssigkeit oder eines Gases, in einem durchströmten Körper zu messen. Meist wird ein Fluidstrom durch ein Rohr geleitet und die gemessene Durchflussrate des Fluides soll ermittelt werden. Dabei kann sowohl ein Volumenstrom, also ein Volumen pro Zeit ermittelt werden als auch das kumulierte Volumen selbst durch Integration bzw. Summation des Volumenstroms über die Zeit bestimmt werden. Hierbei kann insbesondere im Falle von Gas je nach Auslegung und Bauart des Messgerätes ein von Temperatur und Druck abhängiges sogenanntes Betriebsvolumen ermittelt werden, außerdem auch ein von Temperatur und Druck unabhängiges Normvolumen. Andererseits kann bei Kenntnis der Dichte des fluiden Mediums und der Rohrleitungsgeometrie, auch ein Massestrom, ausgedrückt in Masse pro Zeit, berechnet werden.

Dem Messvorgang liegt die Wandlung der physikalischen Größe des Durchflusses in ein technisch weiterverwertbares Signal einer anderen physikalischen Größe zugrunde. Derartige Wandler sind bei herkömmlichen Durchflussmessgeräten in verschiedener Gestaltung bekannt, beispielsweise kann ein Spannungssignal, ein Frequenzsignal oder ein Datensignal erzeugt werden, wobei die Wandlung durch einen Durchflusssensor erfolgt. Aus dem Dokument EP 2 453 214 A1 ist ein solcher Durchflusssensor zum Einsatz in der Messstrecke eines Hauptströmungsrohres bekannt.

Eine bewährte und bekannte Anordnung für die Messung sind sogenannte Bypass-Systeme. Dabei wird an einer Bypass-Eingangsöffnung von dem Hauptstrom in dem Hauptströmungsrohr ein Teilstrom an einem Abgriff abgezweigt und durch eine Bypass-Leitung stromabwärts wieder an einem Abgriff dem Hauptstrom zugeführt. In diesem Bypass-Strom wird ein Sensor angeordnet, welcher charakteristische Größen der Bypass-Strömung erfasst. Erforderlich für eine genaue Messung ist dabei, dass in dem betrachteten Messbereich der Bypass-Durchfluss in einem möglichst konstanten Verhältnis zum Hauptstrom-Durchfluss steht, jedenfalls in einem bekannten und reproduzierbaren Zusammenhang. Derartige Durchflussmessgeräte wirken also verlässlich in solchen Bereichen, in denen ein bekanntes, monotones, vorzugsweise noch ein konstantes Verhältnis zwischen dem Strom im Hauptströmungsrohr und dem Bypass-Strom besteht.

Ob und wieviel Fluid durch den Bypass-Strom tritt, ist abhängig von der Druckdifferenz zwischen der Bypass-Eintrittsöffnung, im Weiteren als Zustrom-Abgriff bezeichnet, und Bypass-Austrittsöffnung, im Weiteren als Abstrom-Abgriff bezeichnet. Je größer diese Druckdifferenz ist, desto mehr Fluid wird durch den Bypass geleitet. Obwohl die Abgriffe entlang des Hauptströmungsrohres versetzt angeordnet sind, reicht regelmäßig die durch die Rohrlänge im Hauptströmungsrohr hervorgerufene Druckdifferenz nicht aus, um ausreichend Fluid durch den Bypass zur Erfassung strömen zu lassen.

Daher sind Bypass-Messanordnungen bekannt, bei denen ein Flussbegrenzungsmittel oder auch Druckabfall-Erzeuger zwischen dem Zustrom-Abgriff des Bypasses und dem Abstrom-Abgriff des Bypasses im Hauptströmungsrohr angeordnet werden.

Beispielsweise offenbart die WO 2001/061282 A2 eine derartige Messeinrichtung. Der Bypass übergreift dabei eine Strömungsbegrenzungseinrichtung. Bei der gezeigten Darstellung ist die Strömungsbegrenzungseinrichtung mit einer Vielzahl von Kanälen mit z.B. wabenartiger Anordnung und Querschnitt ausgebildet.

Das Dokument WO 2004/092687 A1 offenbart eine andere Gestaltung der Strömungsbegrenzungsmittel, bei der die Durchgangskanäle in einer besonderen Geometrie und mit besonderen Abmessungen angeordnet sind.

Das Dokument US 5,750,892 offenbart ebenfalls ein Flussbegrenzungsmittel, wobei der Bypass die Flussbegrenzungsmittel nicht vollständig übergreift, sondern nur einen Abschnitt der Flussbegrenzungsmittel übergreift. Dies soll am Eingang und am Ausgang der Flussbegrenzungsmittel auftretende Turbulenzen vom Bypass fernhalten.

Als Durchflusssensoren kommen bei den Systemen z.B. thermische Durchflusssensoren zum Einsatz. Es ist jedoch auch möglich, je nach Gestaltung und Dimensionierung der Messeinrichtung, mechanische Messwertaufnehmer einzusetzen oder andere Systeme, beispielsweise Ultraschallsensoren.

Aus dem Dokument WO 97/38287 ist eine Messeinrichtung mit einer mehrteiligen Bypass-Anordnung bekannt. In jeder der Bypass-Leitungen wird ein Durchfluss mit einem thermischen Sensor gemessen.

Die EP 0 082 484 A2 offenbart ein Durchflussmessgerät für fluktuierende Strömungen im Bereich der Luftansaugung eines Verbrennungsmotors.

DE 10 2004 019521 A1 offenbart eine Messvorrichtung gemäß der Präambel des unabhängigen Anspruchs 1.

Bei den gattungsgemäßen Systemen mit einem Strömungsbypass und einem im Bereich des Bypasses angeordneten Strömungsbegrenzers ist darauf zu achten, dass der Strömungsbegrenzer die Strömungen im Hauptströmungsrohr möglichst in einer Weise beeinflusst, dass zwar eine Druckdifferenz zum Durchströmen des Bypasses hergestellt wird, jedoch auch ein möglichst reproduzierbarer und möglichst linearer Zusammenhang zwischen der Hauptströmung und der Bypass-Strömung besteht. Einfache Bauteile, wie beispielsweise Blendenringe, erzeugen einen nichtlinearen Zusammenhang in der Druckdifferenz an den Bypass-Abgriffen bei variierendem Durchfluss. Näherungsweise steigt bei einer Blende beispielsweise der Druckabfall quadratisch mit dem Durchfluss an. Außerdem können mit der Zeit auftretende Verunreinigungen des Strömungsbegrenzungsmittels, beispielsweise Verstopfungen oder Abnutzungen und Absplitterungen das Strömungsverhalten verändern und Messergebnisse verfälschen.

Aufgabe der Erfindung ist es, eine verlässliche und selbstkontrollierende Einrichtung zur Messung von Fluidströmen bereitzustellen.

Diese Aufgabe wird gelöst durch eine Messvorrichtung mit den Merkmalen des Patentanspruchs 1.

Die erfindungsgemäße Messvorrichtung zur Erfassung eines Fluidflusses weist ein Hauptströmungsrohr zur Führung eines Fluidstromes auf. Dieses Hauptströmungsrohr kann z.B. ein Rohrabschnitt sein, der in einem Messgehäuse eines Fluidzählers, insbesondere eines Gaszählers angeordnet ist. Zu diesem Hauptströmungsrohr ist eine Bypass-Anordnung ausgebildet, welche einen primären Zustrom-Abgriff und einen primären Abstrom-Abgriff aufweist. Diese Abgriffe sind mit dem Hauptströmungsrohr in Fluidkommunikation gekoppelt, um einen Teilstrom aus dem Hauptströmungsrohr durch Abschnitte der Bypass-Anordnung zu führen.

Im Rahmen dieser Anmeldung ist als Bypass-Anordnung eine solche Kanalstruktur oder Leitungsstruktur zu verstehen, welche eine Fluidpassage unter Umgehung eines Abschnitts des Hauptströmungsrohres zur Verfügung stellt. Die Bypass-Anordnung kann entsprechend eine einzige, zusammenhängende Leitungsstruktur aufweisen, es können jedoch auch mehrere, getrennte Leitungsstrukturen zur Umgehung von Abschnitten des Hauptströmungsrohres gebildet sein, welche zusammen die Bypass-Anordnung bilden.

Um eine Erhöhung der Druckdifferenz zwischen dem primären Zustrom-Abgriff und dem primären Abstrom-Abgriff zu erreichen, sind Flussbegrenzungsmittel in dem Hauptströmungsrohr angeordnet. Diese Flussbegrenzungsmittel haben den Zweck, die Strömung im Hauptströmungsrohr zur Erzeugung einer Druckdifferenz zu hemmen. Als Synonyme der Flussbegrenzungsmittel können auch die Begriffe Differenzdruckmittel, Drosselmittel, Druckabfall-Erzeuger, Strömungsbegrenzungseinrichtung oder auch "Pressure Dropper" verwendet werden.

Als Flussbegrenzungsmittel kommen beliebige Mittel aus dem Stand der Technik in Betracht, insbesondere solche, die eine möglichst lineare Druckdifferenzerhöhung zwischen ihren Enden in Abhängigkeit von dem Volumenstrom des Fluides erzeugen. Beispielhaft ist hier als Flussbegrenzungsmittel eine Gestaltung möglich, wie sie in der WO 2001/061282 A2 mit wabenartigen Kanälen gezeigt ist oder in der WO 2004/092687 A1 mit einer Vielzahl von parallelen Strömungskanälen mit kreisrundem Querschnitt.

Die Flussbegrenzungsmittel sind vollständig zwischen dem primären Zustrom-Abgriff und dem primären Abstrom-Abgriff angeordnet. Die Flussbegrenzungsmittel sind in ihrer Länge und Positionierung so bemessen, dass die Bypass-Anordnung die Flussbegrenzungsmittel (oder im Falle von mehrteiligen Flussbegrenzungsmitteln alle Teile) vollständig übergreift. Auf diese Weise werden die Druckerhöhungseffekte der Flussbegrenzungsmittel auf deren Einströmungsseite in Strömung durch Abschnitte der Bypass-Anordnung umgewandelt. Da auch der Einlaufbereich der Flussbegrenzungsmittel übergriffen wird, werden Druckerhöhungen aufgrund von Verstopfungen der Flussbegrenzungsmittel in erhöhtem Durchfluss durch die Bypass-Anordnung resultieren.

Mit der Bypass-Anordnung ist ein erster Durchflusssensor gekoppelt. Im Rahmen der Erfindung ist die Verwendung beliebiger Durchflusssensoren möglich, insbesondere sind thermische Durchflusssensoren einsetzbar oder auch Durchflusssensoren mit anderen Erfassungssystemen, beispielsweise Ultraschallsensoren.

Erfindungsgemäß weist die Messvorrichtung an der Bypass-Anordnung wenigstens einen sekundären Abgriff auf. Dieser ist entlang des Hauptströmungsrohres zwischen den primären Abgriffen des Bypass-Anordnung angeordnet, also zwischen dem primären Zustrom-Abgriff und dem primären Abstrom-Abgriff. Der sekundäre Abgriff, welcher zwischen den primären Abgriffen mit dem Hauptströmungsrohr gekoppelt ist, ist so platziert, dass sich die Flussbegrenzungsmittel stromauf und stromab von dem sekundären Abgriff erstrecken.

Ebenso wie die primären Abgriffe der Bypass-Anordnung ist auch der sekundäre Abgriff mit dem Hauptströmungsrohr in Fluidkommunikation gekoppelt.

Ein zweiter Duchflusssensor ist mit der Bypass-Anordnung gekoppelt. Der erste und der zweite Durchflusssensor sind derart zwischen verschiedenen Abgriffen, ausgewählt aus der Gruppe der primären Abgriffe und dem wenigstens einen ersten sekundären Abgriff, mit der Bypass-Anordnung gekoppelt, dass sich die am nächsten liegenden Abgriffe jedes der Durchflusssensor in wenigstens einem der Abgriffe von den am nächsten liegenden Abgriffen des anderen Durchflusssensor unterscheiden.

Dies bedeutet, dass die Durchflusssensoren den Durchfluss zwischen verschiedenen Paaren von Abgriffen erfassen. Es kann z.B. vorgesehen sein, dass der erste Durchflusssensor zwischen dem primären Zustrom-Abgriff und dem sekundären Abgriff angeordnet ist, wobei der zweite Durchflusssensor zwischen dem sekundären Abgriff und dem primären Abstrom-Abgriff angeordnet ist. Die als nächstes benachbarten Abgriffe unterscheiden sich für jeden der Durchflusssensor in wenigstens einem Abgriff.

Für diesen zweiten Durchflusssensor gilt ebenso wie für den ersten Durchflusssensor, dass ein beliebiges Erfassungskonzept eingesetzt werden kann, insbesondere eine thermische Durchflusserfassung oder eine Durchflusserfassung mit Ultraschall.

Gegenüber dem Stand der Technik zeichnet sich die erfindungsgemäße Messvorrichtung dadurch aus, dass dem Fluidstrom ein Fluidweg durch die Bypass-Anordnung auf verschiedenen Strömungswegen möglich ist. In welchem Strömungsweg welche Fluidströme geführt werden, hängt von den Druckverhältnissen in dem resultierenden System ab. Es ist dabei zu beachten, dass sämtliche Strömungswege durch die Bypass-Anordnung gemäß der Erfindung miteinander in Fluidkommunikation stehen können, dies ist jedoch nicht zwingend erforderlich. Dies bedeutet, die Leitungen (oder Kanäle) der Bypass-Anordnung können gekoppelt sein oder auch abschnittsweise identisch verlaufen. Erfindungsgemäß ist der erste sekundäre Abgriff der Bypass-Anordnung zwischen den primären Abgriffen der Bypass-Anordnung angeordnet. Dies bedeutet, dass in jedem Fall mindestens drei Abgriffe der Bypass-Anordnung an verschiedenen Orten mit dem Hauptströmungsrohr gekoppelt sind. In jedem Fall sind die beiden primären Abgriffe mit dem Hauptströmungsrohr gekoppelt und der dazwischenliegende sekundäre Abgriff.

Der erste sekundäre Abgriff der Bypass-Anordnung, welcher zwischen den primären Abgriffen angeordnet ist, ist zwischen der stromauf gelegenen Zustrom-Endseite und der stromab gelegenen Abstrom-Endseite der Flussbegrenzungsmittel mit dem Hauptströmungsrohr gekoppelt. Dieser sekundäre Abgriff koppelt also mit dem Hauptströmungsrohr in einem Abschnitt, der von den Flussbegrenzungsmitteln überspannt wird und außerdem dem Einlaufbereich der Flussbegrenzungsmittel nachgelagert ist. Dabei können die Flussbegrenzungsmittel einteilig oder mehrteilig ausgebildet sein. Auf diesen sekundären Abgriff wirkt dabei nur ein Teil des Druckabfalls ein, welcher über die gesamten Flussbegrenzungsmittel erzeugt wird.

Gemäß der Erfindung koppeln die Durchflusssensoren in unterschiedlichen Abschnitten mit der Bypass-Anordnung, wobei die Abschnitte beidseitig jeweils durch die nächstliegenden Abgriffe begrenzt sind. Die Durchflusssensoren erfassen damit unterschiedliche Fluidströme, die sich in Abhängigkeit von den herrschenden Druckverhältnissen durch die Bypass-Anordnung bewegen. Da der erste sekundäre Abgriff der Bypass-Anordnung zwischen den primären Abgriffen liegt, besteht für ein Fluid die Möglichkeit, je nach Druckverhältnissen an diesem Ort zwischen den primären Abgriffen in die Bypass-Anordnung einzutreten oder herauszuströmen. Wie unten gezeigt, wird dadurch insbesondere einer Fehlererkennung begünstigt, die aus einer teilweisen Verstopfung der Flussbegrenzungsmittel in deren Einlaufbereich resultiert. Setzten sich beispielsweise die Flussbegrenzungsmittel im ihrem stromauf gerichteten Einlaufbereich zu, so wird dies in einer Erhöhung des Drucks stromauf der Flussbegrenzungsmittel resultieren. Dieser Abschnitt der Flussbegrenzungsmittel weist dann einen höheren Strömungswiderstand auf als der stromabwärts gelegene (unverstopfte) Abschnitt der Flussbegrenzungsmittel. Aufgrund dieser geänderten Druckverhältnisse ändern sich die Durchflussbedingungen zwischen den primären Abgriffen und dem ersten sekundären Abgriff. Der sekundäre Abgriff ist dem Einlaufbereich der Flussbegrenzungsmittel stromabwärts nachgelagert. Die Flussbegrenzungsmittel (oder Teile davon) erstrecken sich, wenigstens abschnittsweise, beidseitig dieses sekundären Abgriffes, so dass die Druckverhältnisse zwischen dem primären Zustrom-Abgriff und diesem sekundären Abgriff verändert werden. Aus den Signalen der Durchflusssensoren und insbesondere der Zusammenschau der Signale der Durchflusssensoren in den unterschiedlichen Abschnitten der Bypass-Anordnung kann auf diese Weise eine teilweise Zusetzung oder Verstopfung oder eine anders geartete Veränderung der Flussbegrenzungsmittel erfasst werden.

Wesentlich ist, dass durch den Vergleich der in den verschiedenen Bypass-Abschnitten erfassten Durchflüsse eine Fehlererkennung im System möglich wird, welche einer einfachen Redundanz der Sensoren in demselben Bypass überlegen ist. Durchflusssensoren werden üblicherweise nach vorgegebenen Strömungsbedingungen kalibriert oder geeicht, so dass bei jedem Durchflusssensor eine Kennlinie in Gestalt eines Signals in Abhängigkeit von dem Durchfluss gespeichert werden kann. So wird später von dem entsprechenden Signal auf einen aktuellen Durchfluss zurückgeschlossen. Da erfindungsgemäß mehrere Abschnitte in der Bypass-Anordnung gebildet sind, die zumindest an drei Stellen mit dem Hauptstrom in Fluidkommunikation stehen und die Durchflusssensoren jeweils mit einem der Abschnitte, jedoch jeweils verschiedenen Abschnitten gekoppelt sind, kann ein abweichendes Durchflussverhalten erfasst werden. Wie unten beschrieben wird, kann je nach Ausgestaltung der Bypass-Geometrien dabei unterschieden werden, ob eine Verstopfung oder andere Veränderung der Flussbegrenzungsmittel vorliegt oder ob einer der Sensoren (oder beide) ein fehlerhaftes Anzeigeverhalten zeigt.

Erfindungsgemäß ist ein einziger, zusammenhängender Bypass-Kanal ausgebildet, so dass der erste sekundäre Abgriff den zusammenhängenden Bypass-Kanal an einer dritten Position zwischen dem primären Zustrom-Abgriff und dem primären Abstrom-Abgriff mit dem Hauptströmungsrohr koppelt.

Entsprechend gehen die Abschnitte mit erfassten Durchflüssen ineinander über. Dies reduziert den Bauaufwand und den Platzbedarf entlang des Rohrumfanges vom Hauptströmungsrohr. Es ist damit eine Bypass-Anordnung gebildet, welche einen stromauf liegenden primären Zustrom-Abgriff, einen damit in Fluid-Kommunikation stehenden sekundären Abgriff und einen in wiederum damit in Fluid-Kommunikation stehenden primären Abstrom-Abgriff aufweist. Der sekundäre Abgriff ist dann ein Mittelabgriff oder Zwischenabgriff in einem die Flussbegrenzungsmittel übergreifenden Kanal zwischen den primären Abgriffen. In dieser Gestaltung strömen in beide Bypass-Systeme Fluidströme gemeinsam ein oder gemeinsam heraus. Dies reduziert die Anzahl der erforderlichen Abgriffe am Hauptströmungsrohr und damit die Komplexität und den Platzbedarf der Anordnung.

Die Abschnitte der Bypass-Anordnung bilden dann eine Struktur, die dem Buchstaben "m" ähnelt. Ein Fluid kann also durch den primären Zustrom-Abgriff in die Bypass-Anordnung eintreten und entweder durch den sekundären Abgriff (ZwischenAbgriff) in das Hauptströmungsrohr zurückströmen oder durch den primären Abstrom-Abgriff in das Hauptströmungsrohr zurückströmen. Welche Fluidmengen sich durch welche Abgriffe bewegen, hängt von den vorherrschenden Druckverhältnissen an den Abgriffs-Koppelpunkten ab. Diese werden auch durch das Druckabfall-Profil über die Flussbegrenzungsmittel bestimmt.

In dieser Gestaltung ist der erste Durchflusssensor in einem ersten Abschnitt des zusammenhängenden Bypass-Kanals mit der Bypass-Anordnung gekoppelt, welcher sich von dem primären Zustrom-Abgriff bis zum ersten sekundären Abgriff erstreckt. Der zweite Durchflusssensor ist in einem zweiten Abschnitt des zusammenhängenden Bypass-Kanals mit der Bypass-Anordnung gekoppelt, welcher sich von dem sekundären Abgriff bis zum primären Abstrom-Abgriff erstreckt.

Diese Gestaltung ist einerseits raumsparend zu bauen, da sie an denselben Umfangsbereich mehrere Abgriffs-Punkte mit dem Hauptströmungsrohr bildet. Andererseits ist eine sehr differenzierte Auswertung möglich, da die Durchflusssensoren die Strömungen in unterschiedlichen Abschnitten der Bypass-Anordnung überwachen. Bei einer inkonsistenten Signalanzeige kann eine Fehlereinschränkung bereits anhand der Signale konkret eingegrenzt werden, wie unten beschrieben wird.

Es ist besonders bevorzugt, wenn die Flussbegrenzungsmittel in Flussrichtung zwischen ihrer stromauf gerichteten Zustrom-Endseite, also ihrem Einlaufbereich, und ihrer stromab gerichteten Abstrom-Endseite wenigstens einen Ausgleichsbereich in dem Hauptströmungsrohr aufweisen. In diesem Ausgleichsbereich ist der freie, durchströmbare Querschnitt gegenüber beiderseits benachbarten Abschnitten des Flussbegrenzungsmittels vergrößert. Der erste sekundäre Abgriff der Bypass-Anordnung ist mit diesem Ausgleichsbereich in Fluidkommunikation gekoppelt.

Als Ausgleichsbereich wird hier ein Bereich verstanden, in dem ein Druckausgleich über den gesamten Querschnitt oder wenigstens wesentliche Abschnitte des Querschnittes des Hauptströmungsrohres möglich ist. Beispielsweise kann dieser Bereich realisiert sein, indem die Wandungen eines Rohrbündel-Flussbegrenzungsmittels in einer Ebene quer zur Strömung durchbrochen sind, so dass ein Fluidübertritt zwischen den Rohren möglich ist.

In einer besonders bevorzugten Gestaltung dieser Art ist der Ausgleichsbereich durch einen Abstandsbereich im Hauptströmungsrohr zwischen Teilen einer mehrteiligen Anordnung der Flussbegrenzungsmittel gebildet. Die Flussbegrenzungsmittel sind also wenigstens zweiteilig ggf. mit noch mehr Teilen ausgebildet, die beabstandet in Flussrichtung im Hauptströmungsrohr angeordnet sind. Zwischen den Flussbegrenzungsmitteln ist ein Abstand eingehalten, in welchem das Hauptströmungsrohr seinen unbegrenzten Querschnitt aufweist. In diesem Bereich kann sich ein Fluid, welches durch den ersten Abschnitt der Flussbegrenzungsmittel geströmt ist, entlang des Querschnittes grundsätzlich verteilen und, gemäß den herrschenden Druckverhältnissen, durch einen anderen Abschnitt entlang des Querschnittes des Hauptströmungsrohres durch die weiteren Teile der Flussbegrenzungsmittel hindurchströmen. In diesem Abstandsbereich ist der sekundäre Abgriff mit dem Hauptströmungsrohr gekoppelt.

Diese Anordnung führt dazu, dass Abschnitte der Bypass-Anordnung verschiedene Teile der mehrteilig ausgebildeten Flussbegrenzungsmittel übergreifen. Auf diese Weise ist eine differenzierte Analyse anhand der Messdaten möglich, ob beispielsweise eine Verstopfung des ersten, stromauf gelegenen Abschnitts der Flussbegrenzungsmittel vorliegt, was durch eine Durchflusserhöhung im umgehenden Abschnitt der Bypass-Anordnung begleitet würde, soweit dieser den blockierten Teil der Flussbegrenzungsmittel übergreift. Eine Verstopfung in diesem ersten Abschnitt der Flussbegrenzungsmittel führt zu einer Druckerhöhung vor den Einströmseiten der Flussbegrenzungsmittel und damit einem erhöhten Eintritt in die Bypass-Anordnung. Die nachgeordneten Teile der Flussbegrenzungsmittel sind jedoch nicht verstopft, so dass die Druckverhältnisse sich so ausbilden werden, dass am sekundären Abgriff ein Teil des Fluides zurück in das Hauptströmungsrohr tritt. Diese Fluidflüsse sind dank der Erfassung der Durchflusssensoren in den beiden Abschnitten der Bypass-Anordnung differenzierbar und auswertbar.

In einer besonders bevorzugten Ausgestaltung der Erfindung weisen Abschnitte der Bypass-Anordnung unterschiedliche Strömungswiderstände auf. Weisen die Abschnitte unterschiedliche Strömungswiderstände auf, so führen dieselben Druckverhältnisse zu verschiedenen Strömungen durch die jeweiligen Abschnitte. Auch wenn dieselben Durchflusssensoren eingesetzt werden, können die unterschiedlichen Strömungsverhältnisse dazu führen, dass eine verbesserte Fehlererkennung möglich ist. Jeder der Durchflusssensoren weist seine eigene, meist nichtlineare Kennlinie auf. Bei der Kalibrierung werden zu einer gegebenen Durchflussrate bei unterschiedlichen Strömungswiderständen der Bypässe verschiedene Signaldaten der jeweiligen Durchflusssensoren generiert. Es wird jedoch in der Kalibrierung erkannt und gespeichert, dass bei einem gegebenen Durchfluss diese unterschiedlichen Signale einander zugeordnet und konsistent sind. Tritt nun eine Störung der Sensoren auf, selbst wenn diese gleichartig an beiden Durchflusssensoren auftritt, führt dies aufgrund der nichtlinearen Kennlinien und der unterschiedlichen Strömungswiderstände der verschiedenen Abschnitte der Bypass-Anordnung dazu, dass inkonsistente Signalantworten der Sensoren auftreten. Aufgrund der nichtlinearen Kennlinie wirkt sich nämlich bei den Bypässen mit unterschiedlichen Strömungswiderständen die Fehlerfassung verschieden auf die Durchflusssensoren aus. Die gelieferten Signaldaten von den Durchflusssensoren sind dann nicht mehr konsistent, zeigen also unterschiedliche Durchflüsse an. Auf diese Weise lassen sich auch gleichartige Verschlechterungen der Sensorzustände erkennen. Dieser Zusammenhang wird weiter unten näher erläutert.

Es ist bevorzugt, wenn die Bypass-Anordnung im Bereich des ersten Durchflusssensors einen anderen freien Querschnitt aufweist als im Bereich des zweiten Durchflusssensors.

Eine Querschnittsänderung in der Bypass-Anordnung (oder auch eine andere Querschnittsabfolge oder ganz allgemein eine andere Ausgestaltung des Bypasses) führt zu unterschiedlichen Strömungswiderständen und Strömungsgeschwindigkeiten des Fluides. Die vorgenannten Vorteile einer verbesserten Fehlererkennung können auf diese Weise zusätzlich zu der Erkennung einer Verstopfung durch den Vergleich der Messwerte in den verschiedenen Abschnitten der Bypass-Anordnung erkannt werden. In einer alternativen Gestaltung werden die Flussbegrenzungsmittel abschnittsweise mit verschiedenen Strömungswiderständen ausgebildet. Dazu können beispielweise die freien Querschnitte der Rohrbündel oder Waben eines Flussbegrenzungsmittels abschnittsweise verändert werden. Alternativ können die Flussbegrenzungsmittel, wie oben bereits beschrieben, mehrteilig ausgebildet werden, wobei die einzelnen Teile unterschiedliche Längserstreckungen in Strömungsrichtung und/oder unterschiedliche Größen der Öffnungen aufweisen. Auch durch diese Gestaltung wird ein unterschiedlicher Strömungswiderstand der einzelnen Teile der Flussbegrenzungsmittel herbeigeführt.

Sämtliche dieser Gestaltungen dienen dazu, die Durchflusssensoren unterschiedlich anzuströmen, wobei die nichtlineare Kennlinie der Durchflusssensoren im Vergleich zur Fehlererkennung genutzt wird. Es ist dabei insbesondere bevorzugt, wenn die Flussbegrenzungsmittel in Gestalt eines Körpers mit einer Vielzahl von Strömungskanälen ausgebildet sind, die beispielsweise als Rohrbündel geformt sind und einen runden oder wabenförmigen Querschnitt aufweisen.

Derartige Bauteile sind in der Technik bekannt und als Flussbegrenzungsmittel kommerziell in großer Stückzahl verfügbar sowie grundsätzlich mit geringem Aufwand zu fertigen. Sie haben den Vorteil, dass sie eine nahezu lineare Druckerhöhung in Abhängigkeit von dem Volumenstrom hervorbringen, da eine weitgehend lineare Strömung durch diese Flussbegrenzungsmittel hervorgerufen wird.

In einer alternativen Ausgestaltung der Erfindung sind die Flussbegrenzungsmittel mehrteilig ausgebildet, wobei ein erster, stromaufwärts liegender Abschnitt als Netzstruktur ausgebildet ist, wobei die größte Maschenweite des Netzes kleiner als der kleinste zusammenhängende Querschnitt des zweiten Abschnittes ist.

Die Netzstruktur hat grundsätzlich den Nachteil, dass sie eine nichtlineare Strömung hervorruft, und daher eine nichtlineare Druckerhöhung hervorruft, insbesondere in Bereichen geringer Strömungsraten. Gleichwohl ist diese Gestaltung bei Systemen, bei denen regelmäßig von erhöhten Strömungsraten ausgegangen werden kann, mit Vorteil einzusetzen. Die Netzstrukturen sind einfach einzubringen und zu produzieren und halten aufgrund der beanspruchten Maschenweite Fremdstoffe von den nachgeordneten Flussbegrenzungsmitteln fern, da diese nicht durch die Maschen hindurchtreten können. Die nachgeordneten Flussbegrenzungsmittel können wiederum Rohrbündel- oder Waben-Flussbegrenzungsmittel sein. In dieser Gestaltung ist wiederum vorgesehen, dass der primäre Zustrom-Abgriff der Bypass-Anordnung stromauf von der Netzstruktur liegt und der erste sekundäre Abgriff in dem Freiraum zwischen der Netzstruktur den nachgeordneten Flussbegrenzungsmitteln mit dem Hauptströmungsrohr koppelt. Der stromabwärts gelegene primäre Abstrom-Abgriff übergreift mit dem primären Zustrom-Abgriff die gesamten Flussbegrenzungsmittel. Eine Verstopfung des Netzes kann daher durch eine Veränderung des Flusses zwischen dem Abgriff stromaufwärts des Netzes und stromabwärts des Netzes festgestellt werden. Diese Gestaltung ist einfach in der Herstellung und bietet bei höheren Flussraten eine gute Fehlererkennung hinsichtlich der Verstopfung der Flussbegrenzungsmittel.

Die Erfindung wird nun anhand der beiliegenden Zeichnungen näher erläutert.
Figur 1 zeigt schematisch eine Messvorrichtung mit einem Fluid-Bypass gemäß dem Stand der Technik.
Figur 2 zeigt eine erste Ausführungsform einer erfindungsgemäßen Messvorrichtung.
Figur 3a zeigt eine zweite Ausführungsform einer erfindungsgemäßen Messvorrichtung.
Figur 3b zeigt Kennlinien der Sensoren in der zweiten Ausführungsform.
Figur 4a zeigt eine dritte Ausführungsform einer erfindungsgemäßen Messvorrichtung.
Figur 4b zeigt Kennlinien der Sensoren in der dritten Ausführungsform.
Figur 5a zeigt eine vierte Ausführungsform einer erfindungsgemäßen Messvorrichtung.
Figur 5b zeigt Kennlinien der Sensoren in der vierten Ausführungsform.
Figur 6 zeigt eine fünfte Ausführungsform gemäß der Erfindung.
Figur 7 zeigt eine nicht-erfindungsgemäße Ausführungsform.
Figur 8a zeigt eine sechste Ausführungsform der erfindungsgemäßen Messvorrichtung.
Figur 8b zeigt Kennlinien der Sensoren aus der sechsten Ausführungsform.

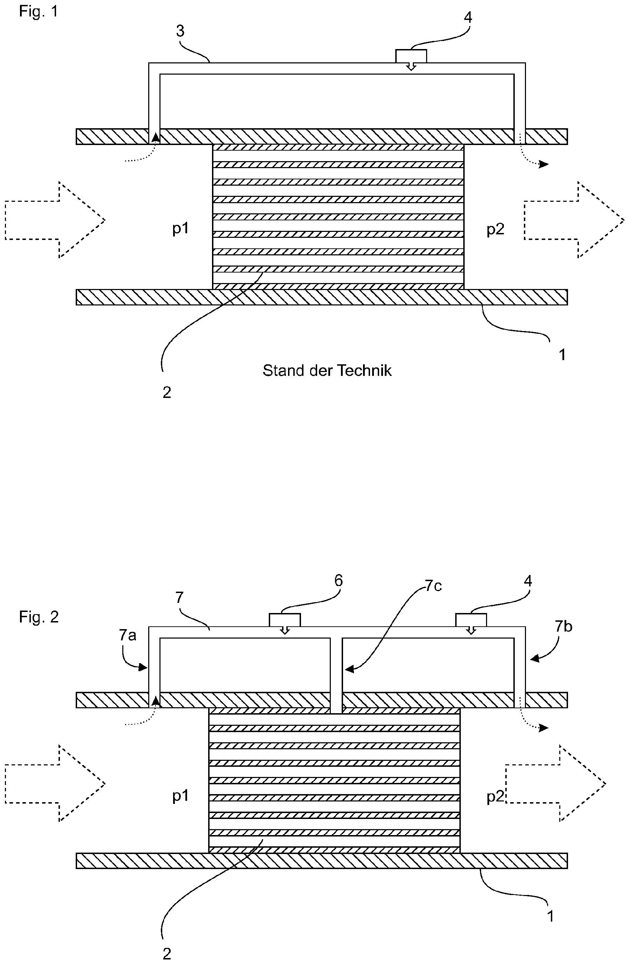

In Figur 1 ist eine Messvorrichtung gemäß dem Stand der Technik gezeigt. Ein Hauptströmungsrohr 1 ist zur Durchleitung eines Fluides, in diesem Fall einer Gasströmung, ausgebildet. Die Gasströmung ist in ihrer Richtung durch gepunktete Pfeile in Bild 1 schematisch dargestellt. Eingepasst in das Hauptströmungsrohr ist eine Rohrbündelanordnung 2 als Flussbegrenzungsmittel. Dieses Flussbegrenzungsmittel reduziert an seinem Einbauort den freien Querschnitt des Hauptströmungsrohres 1 und sorgt für eine Druckerhöhung an der stromaufwärts gewandten Seite des Flussbegrenzungsmittels 2. Dort wird der Druck auf einen Druck P1 erhöht, während auf der Abstromseite der Flussbegrenzungsmittel ein Druck P2 herrscht. Die Druckdifferenz ΔP = P1 - P2 führt zu einer abgezweigten Strömung, die durch einen Bypass 3 geleitet wird. Auf der stromaufwärts gelegenen Seite (in der Zeichnung links) tritt Fluid in den Bypass 3 ein und strömt, gemäß dem Druckgefälle, auf der Abstromseite der Flussbegrenzungsmittel 2 wieder in das Hauptströmungsrohr zurück. Am Bypass ist eine Durchflussmesseinrichtung in Gestalt eines Durchflusssensors 4 mit dem Bypass-Strom gekoppelt. Diesem Ausführungsbeispiel ist ein thermischer Durchflusssensor 4 vorgesehen. Die Flussbegrenzungsmittel sind so ausgebildet, dass die erzeugte Druckdifferenz zwischen der Einströmseite und der Ausströmseite nahezu linear mit der Durchflussrate des Hauptströmungsrohres skaliert. Der Durchflusssensor 4 ist mit einer Kennlinie kalibriert oder geeicht, welche eine Rückrechnung von den Sensorsignalen auf die Hauptströmung erlaubt. Entsprechend kann die mit dem Durchflusssensor 4 erfasste Fluidströmung als repräsentatives Signal für die Hauptströmung durch das Hauptströmungsrohr 1 verwendet werden.

Bei Alterung des Durchflusssensors 4, einem technischen Defekt oder auch einer Verstopfung der Flussbegrenzungsmittel 2 können Zustände eintreten, in denen der Durchflusssensor 4 Daten liefert, die nicht mit dem tatsächlichen Durchfluss durch das Hauptströmungsrohr 1 übereinstimmen. Eine Verstopfung der Flussbegrenzungsmittel 2 führt beispielsweise zu einer weiteren Druckerhöhung des Druckes P1 und dazu zu einem verstärkten Strom durch den Bypass 3. Der Durchflusssensor 4 registriert dann eine höhere Strömung als tatsächlich vorliegt, da er sich weiterhin auf die ursprünglich kalibrierten Daten mit dem unverstopften Flussbegrenzungsmittel 2 verlässt.

Figur 2 zeigt eine Gestaltung gemäß einer ersten Ausführungsform der Erfindung. In dem Hauptströmungsrohr 1 ist wiederum das Flussbegrenzungsmittel 2 angeordnet. Die Bypass-Anordnung 7 ist jedoch in diesem Ausführungsbeispiel neben den primären Abgriffen 7a und 7b mit einem mittleren Abgriff 7c als erstem sekundären Abgriff versehen, welcher in der Mitte des Flussbegrenzungsmittels 2 mit dem Hauptstrom koppelt.

Dadurch sind mehrere Abschnitte der Bypass-Anordnung gebildet. Ein erster Abschnitt erstreckt sich von dem ersten, stromaufwärts liegenden Abgriff 7a bis zum Mittelabgriff 7c. Ein weiterer Abschnitt besteht vom Mittelabgriff 7c bis zum stromabwärts gelegenen Abgriff 7b hinter den Flussbegrenzungsmitteln. In diesem Ausführungsbeispiel steht der Mittelabgriff 7c in Fluidverbindung mit nur einem Teil der parallelen Strömungswege in den Flussbegrenzungsmitteln 2, da die Rohre des Rohrbündels voneinander getrennt geführt sind.

Die Signale der Durchflusssensoren 4 und 6 sind bei einem normalen Betrieb konsistent, sie zeigen also gemäß ihrer ursprünglichen Kalibrierung jeweils Messwerte an, die zu demselben Wert eines Fluiddurchflusses durch das Hauptströmungsrohres 1 gehören. Altert einer der Sensoren außergewöhnlich schnell oder liegt ein technischer Defekt vor, kann anhand einer inkonsistenten Signalerfassung auf einen Defekt eines der Sensoren rückgeschlossen werden.

Weiterhin kann durch die Sensoren erkannt werden, wenn eine Verstopfung im Einlaufbereich der Flussbegrenzungsmittel 2 vorliegt. Dies gilt im vorliegenden Beispiel insbesondere dann, wenn die Verstopfung diejenigen Leitungsabschnitte der Flussbegrenzungsmittel 2 betrifft, mit welchen der Mittelabgriff 7c gekoppelt ist. Kommt es zu einer solchen Verstopfung, ändert sich die Menge des Fluides, welches durch den Mittelabgriff 7c strömt. Dies liegt daran, dass die für den Mittelabgriff 7c vorliegenden Druckverhältnisse im Bereich der Koppelung mit den Flussbegrenzungsmitteln 2 verändert werden, wenn der Einlaufbereich blockiert oder teilweise verstopft ist. Die Sensoren 4 und 6 werden dann Messwerte liefern, die einen erhöhten Fluidstrom an dem Sensor 6 feststellen, aufgrund der Abströmung durch den Mittelabgriff 7c jedoch keine konsistente Erhöhung der Signale am Sensor 4. Auf diese Weise kann auf eine Verschmutzungssituation zurückgeschlossen werden.

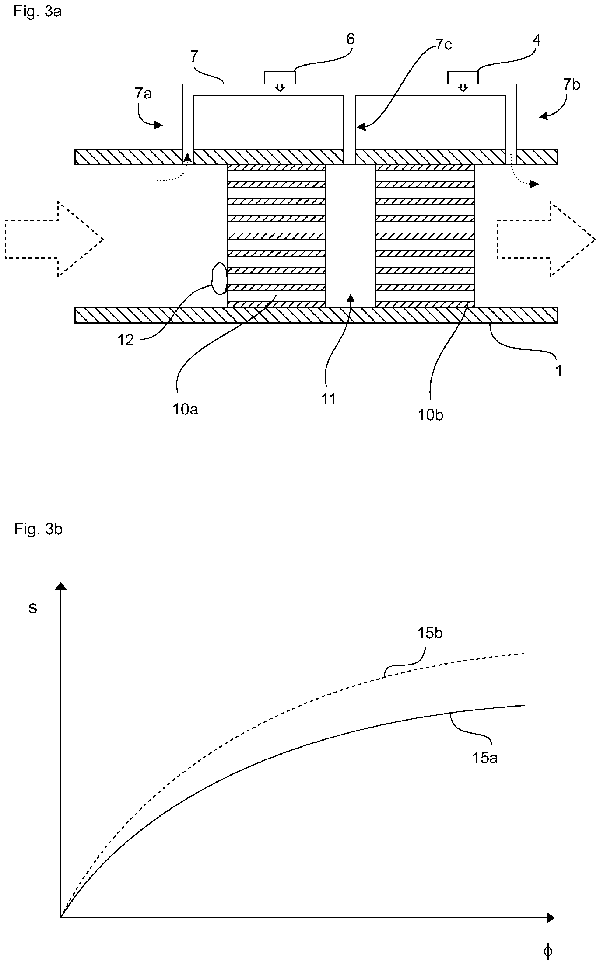

In Figur 3a ist eine Weiterbildung der vorgenannten Ausführungsform gezeigt. In dieser Ausführungsform ist in dem Hauptströmungsrohr 1 ein mehrteiliges Flussbegrenzungsmittel 10a, 10b angeordnet. Zwei Rohrbündel-Flussbegrenzer sind zur Bildung der Flussbegrenzungsmittel voneinander beabstandet in dem Hauptströmungsrohr 1 angeordnet. Zwischen diesen beiden Teilen 10a und 10b liegt ein freier Raum 11, in welchem sich das Fluid über den gesamten Querschnitt des Hauptströmungsrohres 1 bewegen kann. Dieser Raum 11 wird in diesem Zusammenhang als Ausgleichsraum bezeichnet. Entsprechend dem vorhergehenden Beispiel sind wiederum Abschnitte der Bypass-Anordnung ausgebildet. Der erste Abschnitt ist von der stromauf gewandten Seite des Zustrom-Abgriffes 7a bis zum Mittelabgriff 7c gebildet. Der zweite Abschnitt ist vom Mittelabgriff 7c bis zu dem primären Abstrom-Abgriff 7b gebildet, welcher auf der stromabwärts gewandten Seite hinter dem Flussbegrenzungsmittel 10b angeordnet ist. Der Mittelabgriff 7c steht mit dem Ausgleichsraum 11 in Fluidkommunikation.

Auch hier gibt bei einem kalibrierten System der Durchflusssensor 4 ein Sensorsignal zu einer Durchflussmenge im Hauptströmungsrohr 1 an, welches mit den Signalen des Sensors 6 konsistent ist. Wird jedoch das Flussbegrenzungsmittel 10a teilweise verstopft, was in diesem Beispiel durch eine Fremdkörper 12 angedeutet ist, so werden die Druckverhältnisse verändert, da sich der Druck vor dem Flussbegrenzungsmittel 10a erhöht und ein verstärkter Fluss von dem Durchflusssensor 6 erkannt wird. Durch den Mittelabgriff 7c fließt dann Fluid in den Ausgleichsraum 11 und durch die Flussbegrenzungsmittel 10b weiter stromabwärts. Dies liegt daran, dass der nachgeordnete und beabstandete Teil 10b der Flussbegrenzungsmittel unverstopft ist. Auf diese Weise kann anhand der inkonsistenten Signale der Durchflusssensoren 4 und 6 eine Verstopfung der Flussbegrenzungsmittel 10a erkannt werden.

In Figur 3b ist schematisch eine Kennlinie gezeigt, welche dem Sensor 6 zuzuordnen ist. Die Kennlinie 15a ist die kalibrierte Kennlinie, welche bei ordnungsgemäßem Wirken der Durchflusseinrichtung eine monoton steigende Funktion des Sensorsignals gegenüber dem Durchfluss anzeigt. Kommt es jedoch zu einer Verstopfung mit einem Fremdkörper 12, so steigt die Kennlinie auf die Lage der Linie 15b und zeigt damit bei demselben tatsächlichen Durchfluss ein höheres Signal. Dem gegenüber wird das Sensorsignal des Sensors 4 jedoch nicht entsprechend steigen, so dass eine Inkonsistenz erkennbar ist und damit eine Verstopfung der Flussbegrenzungsmittel 10a.

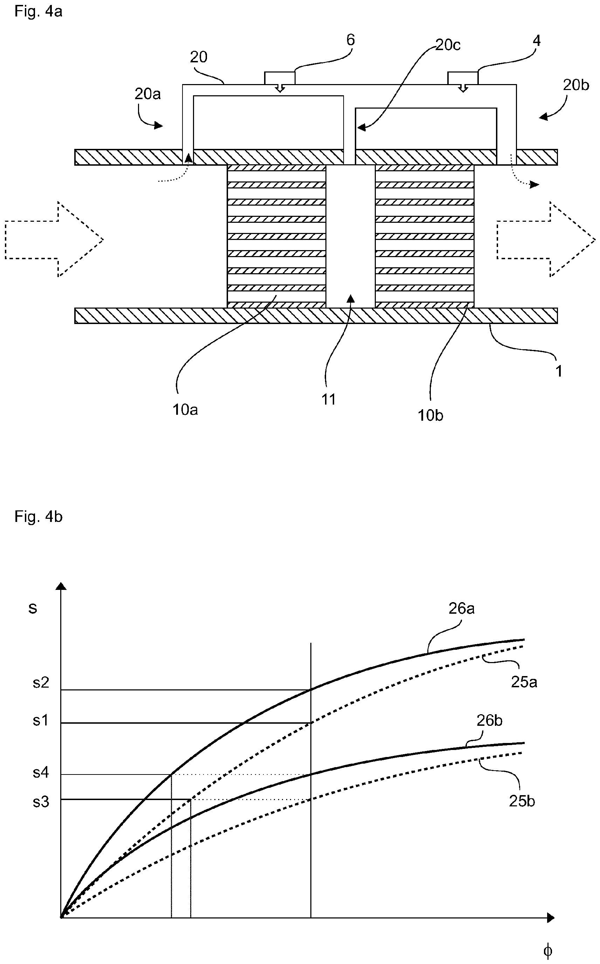

Figur 4a zeigt eine dritte Ausführungsform der erfindungsgemäßen Messvorrichtung. Wiederum sind in dem Hauptströmungsrohr 1 beabstandet angeordnete Abschnitte der Flussbegrenzungsmittel 10a, 10b angeordnet. In diesem Beispiel ist jedoch die Bypass-Anordnung 20 anders ausgestaltet, so dass die Durchflusssensoren 4 und 6 mit unterschiedlichen Strömungsbedingungen angeströmt werden. Wiederum ist ein Mittelabgriff 20c mit dem Ausgleichsraum 11 gekoppelt. Die Bypass-Anordnung 20 ist jedoch im Abschnitt vom Mittelabgriff 20c bis zum stromabwärts gelegenen Endabgriff 20b des Bypasses mit einem vergrößerten Querschnitt gegenüber dem Abschnitt vom Abgriff 20a bis zum Mittelabgriff 20c ausgebildet. Dieser vergrößerte Querschnitt führt in dem Bypass 20 zu einem anderen Strömungsverhalten mit höheren Strömungsgeschwindigkeiten im Bereich des Sensors 4 gegenüber dem Sensor 6.

Der Vorteil dieser Gestaltung liegt darin, dass bei der Kalibrierung des Systems zu einem gegebenen Fluidfluss im Hauptströmungsrohr 1 unterschiedliche, nichtlineare Funktionen der Durchflusssensoren 4 und 6 kalibriert werden. Dies wird anhand der Kennlinien in Figur 4b deutlich. Im kalibrierten Zustand und bei freien, unverstopften Flussbegrenzungsmitteln 10a und 10b gibt die Kennlinie 25a ein Sensorsignal des Durchflusssensors 6 gegenüber dem Durchfluss an. Die Kennlinie 26a ist die Kennlinie des Durchflusssensors 4 bei gleichen Bedingungen. Der Sensor liefert angesichts des größeren Querschnittes des Bypasses in diesem Abschnitt bei Sensor 4 ein größeres Signal. Bei der Kalibrierung werden zu gegebenen Fluidströmen konsistente Wertepaare gebildet, wie die Sensorsignale S1 und S2 der beiden Sensoren, welche zu einer identischen Durchflussrate gehören.

Kommt es nun zu einer Verschlechterung, z.B. Alterung oder Verschmutzung der Sensoren oder zu irgendeiner Art von technischem Defekt, so kann dies zu einer ähnlichen Verschlechterung der Signale beider Sensoren führen. Angesichts der unterschiedlichen Anströmung der Sensoren 4 und 6 und der Nichtlinearität der Kennlinien ist es jedoch nahezu ausgeschlossen, dass die Defekte sich gegenseitig so kompensieren, dass die gelieferten Sensordaten weiterhin konsistent bleiben. Dies ist im Beispiel erkennbar, wo die Kennlinien 25b und 26b die Kennlinien von gealterten Sensoren 4 bzw. 6 darstellen. Wird das Signal S3 am Sensor 6 abgegriffen und das Signal S4 am Sensor 4, so sind die dazu ermittelten Durchflüsse inkonsistent und es kann auf einen Fehlerzustand der Messvorrichtung geschlossen werden. Dies ist insbesondere auch dann möglich, wenn die Sensoren 4 und 6 baugleich sind. Durch die unterschiedliche Anströmung durch die Querschnittsveränderung in der Bypass-Anordnung wird es möglich, eine derartige Auswertung durchzuführen.

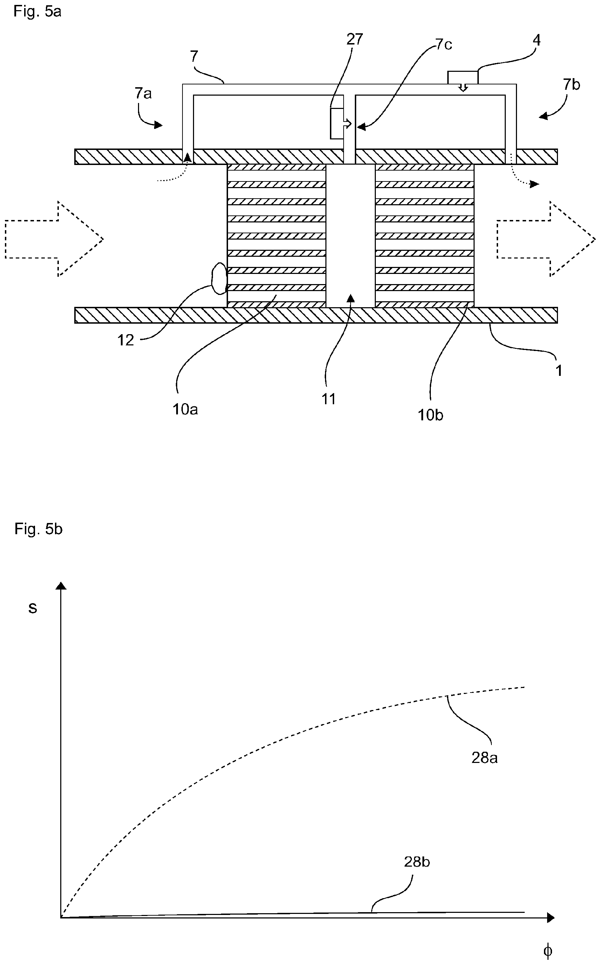

Figur 5a zeigt ein viertes Ausführungsbeispiel der erfindungsgemäßen Messvorrichtung. Ein Durchflusssensor 27 ist in diesem Beispiel am Mittelabgriff 7c angeordnet. Bei freiem (unverstopftem) Flussbegrenzungsmittel 10a strömt durch den Mittelabgriff 7c kaum Fluid, was sich in der Kennlinie 28b in Figur 5b zeigt. Kommt es zu einer Verstopfung, dargestellt durch Fremdkörper 12, strömt Fluid durch den Mittelabgriff 7c in den freien Ausgleichsraum 11 und von dort durch die nachgeordneten Flussbegrenzungsmittel 10b. Das Signal steigt dann auf die Signalkurve 28a in Figur 5b. Mit einem solchen Sensor am Mittelabgriff 7c kann sehr sensitiv eine Verstopfung der Flussbegrenzungsmittel detektiert werden.

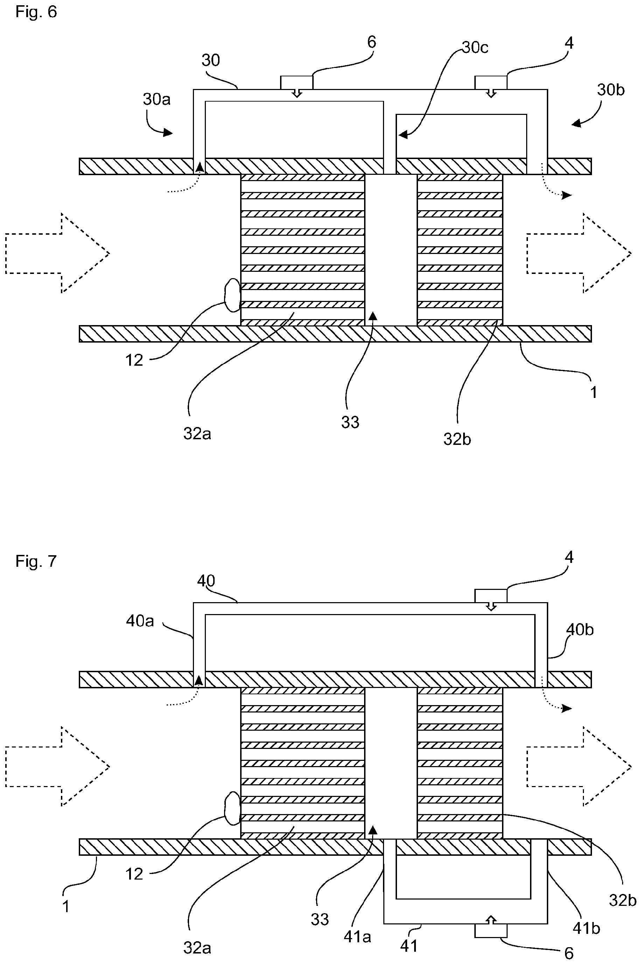

Figur 6 zeigt ein fünftes Ausführungsbeispiel der erfindungsgemäßen Messvorrichtung. In dieser Gestaltung ist die Bypass-Anordnung 30 wiederum mit einem Mittelabgriff 30c und zwei primären Abgriffen 30a, 30b ausgebildet. Die Flussbegrenzungsmittel 32a, 32b sind auch hier mehrteilig, jedoch mit unterschiedlicher Durchströmungslänge und/oder unterschiedlichen Größen der Öffnungen ausgebildet. Der Abschnitt 32a des Flussbegrenzungsmittels ist länger ausgebildet als Abschnitt 32b. Auch dies führt zu einer Asymmetrie der Strömungsverhältnisse in der Bypass-Anordnung 30, so dass anhand der nichtlinearen Kennlinien der Sensoren 4 und 6 die Sensorsignale hinsichtlich ihrer Konsistenz ausgewertet werden können. Eine Verstopfung der Flussbegrenzungsmittel durch Fremdkörper 12 ist ebenfalls detektierbar.

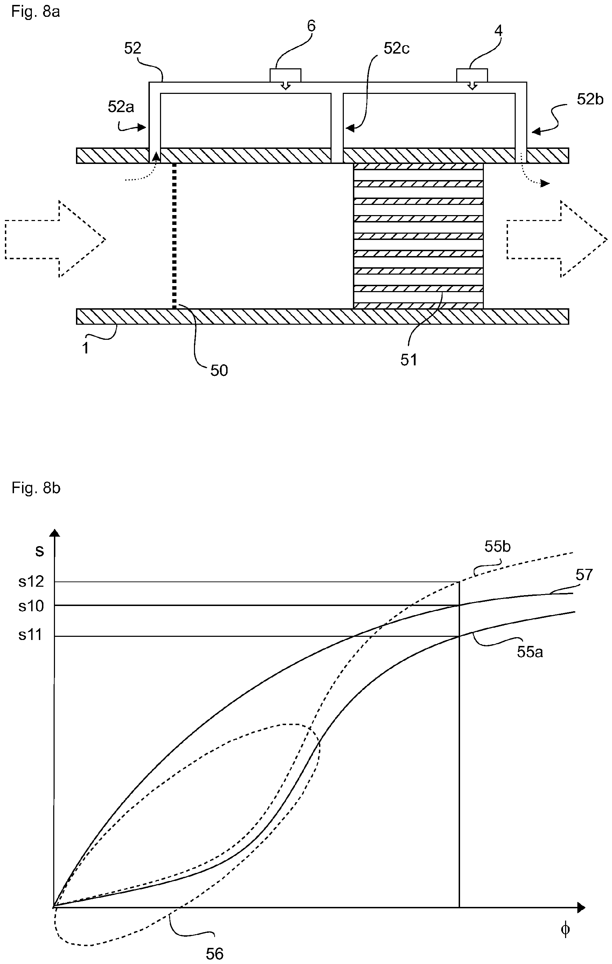

Figur 8a zeigt eine sechste Ausführungsform der erfindungsgemäßen Messvorrichtung. Im Hauptströmungsrohr 1 ist ein Gitternetz 50 angeordnet, welches zusammen mit dem Rohrbündel-Flussbegrenzer 51 die Flussbegrenzungsmittel bildet. Die Bypass-Anordnung 52 ist wiederum mit den primären Abgriffen 52a, 52b und dem Mittelabgriff 52c ausgebildet. Der erste Abschnitt der Bypass-Anordnung erstreckt sich vom Abgriff 52a zum Abgriff 52c, der zweite Abschnitt erstreckt sich vom Abgriff 52c bis zum Abgriff 52b. Wiederum, wie in den bereits beschriebenen Bypass-Anordnungen, erfasst der Sensor 6 den Fluidstrom, der in ersten Abschnitt der Bypass-Anordnung einströmt, während der Sensor 4 nur den Fluidstrom durch den zweiten Abschnitt erfasst.

In diesem Ausführungsbeispiel ist die Maschenbreite des Netzes 50 so gewählt, dass Fremdkörper vom Netz 50 aufgehalten werden, bevor sie in die Rohrbündel-Flussbegrenzer 51 eintreten können. Die freie Öffnung des Netzes 50 ist also geringer als die freien Öffnungen des Rohrbündel-Flussbegrenzers 51. Diese Gestaltung ist besonders einfach herzustellen und zu fertigen. Es ist dabei zu beachten, dass ein Gitter 50 eine nichtlineare Strömung im Bereich des Gitters verursacht. Bei niedrigen Durchflussraten resultiert daher ein geringer Signalpegel, wie durch die Kennlinien in Figur 8b gezeigt. Die Kennlinie 55a zeigt dabei die Signale des Sensors 6 bei einem unverstopften Netz 50 während die Kennlinie 55b die Signale bei einem verstopften Netz 50 anzeigt. Die Kennlinie 57 hingegen zeigt die Signale des Sensors 4 an.

Der Bereich 56 umgibt den Bereich, in welchem aufgrund von geringer Signalpegel keine verlässliche Auswertung der Signale des Sensors 6 sinnvoll ist. In diesem System wirkt der Abschnitt der Bypass-Anordnung mit dem Durchflusssensor 6 entsprechend für die Verstopfungserkennung des Schutznetzes 50, wobei erst bei höheren Durchflussraten diese Diagnosefunktion aktiviert wird, da erst dort die abweichenden und inkonsistenten Messdaten erkennbar werden. Zeigt also bei einem erhöhten Durchfluss der Sensor 4 gemäß der Kennlinie 57 den Wert S10, so ist gemäß Kalibrierung und Kennlinie 55a dazu ein Wert S11 des Sensors 6 erwartet. Wird jedoch der Wert S12 ermittelt, so kann auf eine Verstopfung des Netzes 50 rückgeschlossen werden.

## Patentansprüche

1. Messvorrichtung zur Erfassung eines Fluidflusses,
mit einem Hauptströmungsrohr (1) zur Führung eines Fluidflusses,
mit einer Bypass-Anordnung (7; 20; 30; 52), welche einen primären Zustrom-Abgriff (7a; 20a; 30a; 52a) und einen primären Abstrom-Abgriff (7b; 20b; 30b; 52b) aufweist, welche beide mit dem Hauptströmungsrohr (1) gekoppelt sind,
mit Flussbegrenzungsmitteln (2; 10a, 10b; 32a, 32b; 50, 51), welche in dem Hauptströmungsrohr (1) zwischen dem primären Zustrom-Abgriff (7a; 20a; 30a; 52a) und dem primären Abstrom-Abgriff (7b; 20b; 30b; 52b) der Bypass-Anordnung (7; 20; 30; 52) angeordnet sind und den durchströmbaren Querschnitt des Hauptströmungsrohres (1) reduzieren, wobei die Flussbegrenzungsmittel (2; 10a, 10b; 32a, 32b; 50, 51) zwischen einer stromaufwärts gerichteten Zustrom-Endseite und einer stromabwärts gerichteten Abstrom-Endseite einteilig oder mehrteilig ausgebildet sind, so dass die Bypass-Anordnung die Flussbegrenzungsmittel vollständig übergreift,
wobei ein erster Durchflusssensor (6; 27) mit der Bypass-Anordnung (7; 20; 30; 52) gekoppelt ist, **dadurch gekennzeichnet, dass** die Bypass-Anordnung (7; 20; 30; 52) wenigstens einen ersten sekundären Abgriff (7c; 20c; 30c;) aufweist, wobei der erste sekundäre Abgriff (7c; 20c; 30c;) zwischen dem primären Zustrom-Abgriff (7a; 20a; 30a; 52a) und dem primären Abstrom-Abgriff (7b; 20b; 30b; 52b) und zwischen der Zustrom-Endseite und der Abstrom-Endseite der Flussbegrenzungsmittel (2; 10a, 10b; 32a, 32b; 50, 51) mit dem Hauptströmungsrohr (1) gekoppelt ist, wobei die Bypass-Anordnung (7; 20; 30; 52) mit einem einzigen, zusammenhängenden Bypass-Kanal ausgebildet ist, so dass der erste sekundäre Abgriff (7c; 20c; 30c; 52c) den zusammenhängenden Bypass-Kanal an einer dritten Position zwischen dem primären Zustrom-Abgriff (7a; 20a; 30a; 52a) und dem primären Abstrom-Abgriff (7b; 20b; 30b; 52b) mit dem Hauptströmungsrohr (1) koppelt,
wobei ein zweiter Duchflusssensor (4) mit der Bypass-Anordnung (7; 20; 30; 52) gekoppelt ist,
wobei der erste und der zweite Durchflusssensor zwischen den primären Abgriffen und dem ersten sekundären Abgriff (7c; 20c; 30c;) mit der Bypass-Anordnung (7; 20; 30; 52) gekoppelt sind, wobei der erste Durchflusssensor (6; 27) in einem ersten Abschnitt des zusammenhängenden Bypass-Kanals mit der Bypass-Anordnung (7; 20; 30; 52) gekoppelt ist, welcher sich von dem primären Zustrom-Abgriff (7a; 20a; 30a; 52a) bis zum ersten sekundären Abgriff (7c; 20c; 30c; 52c) erstreckt oder wobei der erste Durchflusssensor in dem ersten sekundären Abgriff angeordnet ist und wobei der zweite Durchflusssensor (4) in einem zweiten Abschnitt des zusammenhängenden Bypass-Kanals mit der Bypass-Anordnung (7; 20; 30; 52) gekoppelt ist, welcher sich von dem ersten sekundären Abgriff (7c; 20c; 30c; 52c) bis zum primären Abstrom-Abgriff (7b; 20b; 30b; 52b) erstreckt.

2. Messvorrichtung nach einem der vorangehenden Ansprüche, wobei die Flussbegrenzungsmittel (10a, 10b; 32a, 32b; 50, 51) in Flussrichtung zwischen ihrer Zustrom-Endseite und ihrer Abstrom-Endseite wenigstens einen Ausgleichsbereich (11) in dem Hauptströmungsrohr (1) aufweisen, in welchem der freie, durchströmbare Querschnitt gegenüber beiderseits benachbarten Abschnitten des Flussbegrenzungsmittels (10a, 10b; 32a, 32b; 50, 51) vergrößert ist,
wobei der erste sekundäre Abgriff (7c; 20c; 30c; 52c) mit dem Ausgleichsbereich gekoppelt ist.

3. Messvorrichtung nach Anspruch 2, wobei die Flussbegrenzungsmittel (10a, 10b; 32a, 32b; 50, 51) mehrteilig ausgebildet sind und wenigstens zwei Teile der Flussbegrenzungsmittel (10a, 10b; 32a, 32b; 50, 51) in Strömungsrichtung mit einem Abstand in dem Hauptströmungsrohr (1) angeordnet sind, so dass der Ausgleichsbereich durch den Abstandsbereich gebildet ist.

4. Messvorrichtung nach einem der vorangehenden Ansprüche, wobei die Bypass-Anordnung (20; 30; 52) abschnittsweise verschiedene Strömungswiderstände aufweist.

5. Messvorrichtung nach einem der vorangehenden Ansprüche, wobei die Bypass-Anordnung (20; 30; 52) im Bereich des ersten Durchflusssensors einen anderen freien Querschnitt aufweist als im Bereich des zweiten Durchflusssensors.

6. Messvorrichtung nach einem der vorangehenden Ansprüche, wobei die Flussbegrenzungsmittel (2; 10a, 10b; 32a, 32b; 50, 51) entlang ihrer axialen Erstreckung in Strömungsrichtung abschnittsweise verschiedene Strömungswiderstände aufweisen, wobei der erste sekundäre Abgriff (7c; 20c; 30c;) mit dem Hauptströmungsrohr (1) in einem Bereich zwischen Abschnitten der Flussbegrenzungsmittel (2; 10a, 10b; 32a, 32b; 50, 51) mit unterschiedlichen Strömungswiderständen gekoppelt ist.

7. Messvorrichtung nach Anspruch 6, wobei die Flussbegrenzungsmittel (32a, 32b; 50, 51) einen stromaufwärts liegenden ersten Abschnitt mit einer ersten axialen Erstreckung in Strömungsrichtung aufweisen und einen stromabwärts angeordneten zweiten Abschnitt mit einer zweiten axialen Erstreckung in Strömungsrichtung, wobei die erste Erstreckung kürzer ist als die zweite Erstreckung.

8. Messvorrichtung nach Anspruch 6 oder 7, wobei die Flussbegrenzungsmittel (32a, 32b; 50, 51) einen stromaufwärts liegenden ersten Abschnitt mit einem ersten freien Querschnitt aufweisen und einen stromabwärts angeordneten zweiten Abschnitt mit einem zweiten freien Querschnitt, wobei der erste freie Querschnitt kleiner ist als der zweite freie Querschnitt.

9. Messvorrichtung nach einem der Ansprüche 6 bis 8, wobei wenigstens einer der Abschnitte des Flussbegrenzungsmittels als Körper mit einer Mehrzahl von parallelen Strömungskanälen ausgebildet ist.

10. Messvorrichtung nach Anspruch 9, wobei die parallelen Strömungskanäle als Rohrbündel ausgebildet sind und wobei die Strömungskanäle einen runden oder wabenförmigen Querschnitt aufweisen.

11. Messvorrichtung nach einem der Ansprüche 3 bis 10, wobei der stromaufwärts liegende erste Abschnitt als Netzstruktur ausgebildet ist, wobei die größte Maschenweite des Netzes kleiner als der kleinste zusammenhängende freie Querschnitt des zweiten Abschnitts ist.

## Claims

1. Flow meter for recording a fluid flow with a main flow pipe (1) for directing a fluid flow
with a by-pass device (7; 20; 30; 52) which has a primary inflow tap (7a; 20a; 30a; 52a) and a primary outflow tap (7b; 20b; 30b; 52b) which are both connected to the main flow pipe (1),
with flow restricting means (2; 10a, 10b; 32a, 32b; 50, 51) which are arranged in the main flow pipe (1) between the primary inflow tap (7a; 20a; 30a; 52a) and the primary outflow tap (7b; 20b; 30b; 52b) of the by-pass device (7; 20; 30; 52) and reduce the cross section of the main flow pipe (1) through which a flow can pass,
wherein the flow restricting means (2; 10a, 10b; 32a, 32b; 50, 51) are configured in one part or in multiple parts between an inflow end side directed upstream and an outflow end side directed downwards so that the by-pass device completely overlaps the flow restricting means,
wherein a first flow sensor (6; 27) is connected to the by-pass device (7; 20; 30; 52),
**characterised in that** the by-pass device (7; 20; 30; 52) has at least one first secondary tap (7c; 20c; 30;) wherein the first secondary tap (7c; 20c; 30c;) between the primary inflow tap (7a; 20a; 30a; 52a) and the primary outflow tap (7b; 20b; 30b; 52b) and between the inflow end side and the outflow end side of the flow restricting means (2; 10a, 10b; 32a, 32b; 50, 51) is connected to the main flow pipe (1),
wherein the by-pass device (7; 20; 30; 52) is designed with a single, contiguous by-pass channel so that the first secondary tap (7c; 20c; 30c; 52c) connects the contiguous by-pass channel at a third position between the primary inflow tap (7a; 20a; 30a; 52a) and the primary outflow tap (7b; 20b; 30b; 52b) with the main flow pipe (1),
wherein a second flow sensor (4) is connected to the by-pass device (7; 20; 30; 52),
wherein the first and the second flow sensor are connected to the by-pass device (7; 20; 30; 52) between the primary taps and the first secondary tap (7c; 20c; 30c;), wherein the first flow sensor (6; 27) is connected in a first section of the contiguous by-pass channel to the by-pass device (7; 20; 30; 52) which extends from the primary inflow tap (7a; 20a; 30a; 52a) to the first secondary tap (7c; 20c; 30c; 52c) or wherein the first flow sensor is arranged in the secondary tap and wherein the second flow sensor (4) is connected to the by-pass device (7; 20; 30; 52) in a second section of the contiguous channel which extends from the first secondary tap (7c; 20c; 30c; 52c) to the primary outflow tap (7b; 20b; 30b; 52b).

2. Flow meter according to any one of the preceding claims, wherein in the direction of flow between their inflow end side and their outflow end side the flow restricting means (10a, 10b; 32a, 32b; 50, 51) have at least one equalising area (11) in the main flow pipe (1) in which the free cross section through which a flow can pass is enlarged in comparison with bilaterally adjacent sections of the flow restricting means (10a, 10b; 32a, 32b; 50, 51),
wherein the first secondary tap (7c; 20c; 30c; 52c) is connected to the equalising area.

3. Flow meter according to claim 2, wherein the flow restricting means (10a, 10b; 32a, 32b; 50, 51) are formed of multiple parts and in the direction of flow at least two parts of the flow restricting means (10a, 10b; 32a, 32b; 50, 51) are arranged spaced with regard to each other in the main flow pipe (1) so that the equalising area is formed by the spacing.

4. Flow meter according to any one of the preceding claims, wherein in sections the by-pass device (20; 30; 52) has different flow resistances.

5. Flow meter according to any one of the preceding claims, wherein in the area of the first flow sensor the by-pass device (20; 30; 52) has a different free cross-section from in the area of the second flow sensor.

6. Flow meter according to any one of the preceding claims, wherein in sections along their axial extent in the direction of flow, the flow restricting means (2; 10a, 10b; 32a, 32b; 50, 51) have different flow resistances, wherein the first secondary tap (7c; 20c; 30c;) is connected to the main flow pipe (1) in an area between sections of the flow restricting means (2; 10a, 10b; 32a, 32b; 50, 51) with different flow resistances.

7. Flow meter according to claim 6, wherein the flow restricting means (32a, 32b; 50, 51) have an upstream first section with a first axial extent in the direction of flow and a downstream second section with a second axial extent in the flow direction, wherein the first extent is shorter than the second extent.

8. Flow meter according to claim 6 or 7, wherein the flow restricting means (32a, 32b; 50, 51) have an upstream first section with a first free cross-section and a downstream second section with a second free cross-section, wherein the first free cross-section is smaller than the second free cross-section.

9. Flow meter according to any one of claims 6 to 8, wherein at least one of the sections of the flow restricting means is designed as a body with a plurality of parallel flow channels.

10. Flow meter according to claim 9, wherein the parallel flow channels are configured as a pipe bundle and wherein the flow channels have a round or honeycomb-shaped cross-section.

11. Flow meter according to any one of claims 3 to 10, wherein the upstream first section is designed as a net structure, wherein the largest mesh width of the net is smaller than the smallest contiguous free cross-section of the second section.

## Revendications

1. Dispositif de mesure, destiné à détecter un écoulement de fluide, pourvu d'un tube d'écoulement principal (1), pour guider un écoulement de fluide,
pourvu d'un agencement de dérivation (7 ; 20 ; 30 ; 52), lequel comporte une prise de prélèvement d'afflux (7a ; 20a ; 30a ; 52a) primaire et une prise de prélèvement de reflux (7b ; 20b ; 30b ; 52b) primaire, lesquelles sont toutes deux couplées sur le tube d'écoulement principal (1),
pourvu de moyens de limitation de l'écoulement (2 ; 10a, 10b ; 32a, 32b ; 50, 51), lesquels sont placés dans le tube d'écoulement principal (1), entre la prise de prélèvement d'afflux (7a ; 20a ; 30 a ; 52a) primaire et la prise de prélèvement de reflux (7b ; 20b ; 30b ; 52b) primaire de l'agencement de dérivation (7 ; 20 ; 30 ; 52) et qui réduisent la section transversale irrigable du tube d'écoulement principal (1), les moyens de limitation de l'écoulement (2 ; 10a, 10b ; 32a, 32b ; 50, 51) étant conçus en une partie ou en plusieurs parties, entre un côté extrême d'afflux orienté en amont et un côté extrême de reflux orienté en aval, de sorte que l'agencement de dérivation recouvre totalement les moyens de limitation de l'écoulement,
un premier débitmètre (6 ; 27) étant couplé avec l'agencement de dérivation (7 ; 20 ; 30 ; 52),
**caractérisé en ce que** l'agencement de dérivation (7 ; 20 ; 30 ; 52) comporte au moins une première prise de prélèvement (7c ; 20c ; 30c ;) secondaire, entre la prise de prélèvement d'afflux (7a ; 20a ; 30a ; 52a) primaire et la prise de prélèvement de reflux (7b ; 20b ; 30b ; 52b) primaire et entre le côté extrême d'afflux et le côté extrême de reflux des moyens de limitation de l'écoulement (2 ; 10a, 10b ; 32a, 32b ; 50, 51), la première prise de prélèvement (7c ; 20c ; 30c ;) secondaire étant couplée avec le tube d'écoulement principal (1),
l'agencement de dérivation (7 ; 20 ; 30 ; 52) étant conçu avec un canal de dérivation unique, cohérent, de sorte que la première prise de prélèvement (7c ; 20c ; 30c ; 52c) secondaire couple le canal de dérivation cohérent sur une troisième position entre la prise de prélèvement d'afflux (7a ; 20a ; 30a ; 52a) primaire et la prise de prélèvement de reflux (7b ; 20b ; 30b ; 52b) primaire avec le tube d'écoulement principal (1), un deuxième débitmètre (4) étant couplé avec l'agencement de dérivation (7 ; 20 ; 30 ; 52),
le premier et le deuxième débitmètres étant couplés entre les prises de prélèvement primaires et la première prise de prélèvement (7c ; 20c ; 30c ;) secondaire avec l'agencement de dérivation (7 ; 20 ; 30 ; 52), dans un premier tronçon du canal de dérivation cohérent, qui s'étend de la prise de prélèvement d'afflux (7a ; 20a ; 30a ; 52a) primaire jusqu'à la première prise de prélèvement (7c ; 20c ; 30c ; 52c) secondaire, le premier débitmètre (6, 27) étant couplé avec l'agencement de dérivation (7 ; 20 ; 30 ; 52) ou le premier débitmètre étant placé dans la première prise de prélèvement secondaire et dans un deuxième tronçon du canal de dérivation cohérent, qui s'étend de la première prise de prélèvement (7c ; 20c ; 30c ; 52c) secondaire jusqu'à la prise de prélèvement de reflux (7b ; 20b ; 30b ; 52b) primaire, le deuxième débitmètre (4) étant couplé avec l'agencement de dérivation (7 ; 20 ; 30 ; 52) .

2. Dispositif de mesure selon l'une quelconque des revendications précédentes, dans la direction d'écoulement, entre leur côté extrême d'afflux et leur côté extrême de reflux, les moyens de limitation de l'écoulement (10a, 10b ; 32a, 32b ; 50, 51) comportant au moins une zone de compensation (11) dans le tube d'écoulement principal (1) dans laquelle la section irrigable libre est agrandie par rapport à des tronçons voisins de part et d'autre du moyen de limitation de l'écoulement (10a, 10b ; 32a, 32b ; 50, 51), la première prise de prélèvement (7c ; 20c ; 30c ; 52c) secondaire étant couplée avec la zone de compensation.

3. Dispositif de mesure selon la revendication 2, les moyens de limitation de l'écoulement (10a, 10b ; 32a, 32b ; 50, 51) étant conçus en plusieurs parties et dans la direction d'écoulement, au moins deux parties des moyens de limitation de l'écoulement (10a, 10b ; 32a, 32b ; 50, 51) étant placées avec un écart dans le tube d'écoulement principal (1), de sorte que la zone de compensation soit formée par la zone d'écart.

4. Dispositif de mesure selon l'une quelconque des revendications précédentes, l'agencement de dérivation (20 ; 30 ; 52) présentant par tronçons différentes résistances à l'écoulement.

5. Dispositif de mesure selon l'une quelconque des revendications précédentes, dans la zone du premier débitmètre, l'agencement de dérivation (20 ; 30 ; 52) présentant une autre section transversale libre que dans la zone du deuxième débitmètre.

6. Dispositif de mesure selon l'une quelconque des revendications précédentes, le long de leur extension axiale, dans la direction d'écoulement, les moyens de limitation de l'écoulement (2 ; 10a, 10b ; 32a, 32b ; 50, 51) présentant par tronçons différentes résistances à l'écoulement, dans une zone entre des tronçons des moyens de limitation de l'écoulement (2 ; 10a, 10b ; 32a, 32b ; 50, 51), la première prise de prélèvement (7c ; 20c ; 30c ;) étant couplée avec le tube d'écoulement principal (1) avec différentes résistances à l'écoulement.

7. Dispositif de mesure selon la revendication 6, les moyens de limitation de l'écoulement (32a, 32b ; 50, 51) comportant un premier tronçon placé en amont, avec une première extension axiale dans la direction d'écoulement et un deuxième tronçon placé en aval, avec une deuxième extension axiale dans la direction d'écoulement, la première extension étant plus courte que la deuxième extension.

8. Dispositif de mesure selon la revendication 6 ou 7, les moyens de limitation de l'écoulement (32a, 32b ; 50, 51) comportant un premier tronçon placé en amont, avec une première section transversale libre et un deuxième tronçon placé en aval, avec une deuxième section transversale libre, la première section transversale libre étant plus petite que la deuxième section transversale libre.

9. Dispositif de mesure selon l'une quelconque des revendications 6 à 8, au moins l'un des tronçons des moyens de limitation de l'écoulement étant conçu sous la forme d'un corps, pourvu d'une pluralité de canaux d'écoulement parallèles.

10. Dispositif de mesure selon la revendication 9, les canaux d'écoulement parallèles étant conçus sous la forme de faisceaux tubulaires et les canaux d'écoulement comportant une section transversale ronde ou de forme alvéolaire.

11. Dispositif de mesure selon l'une quelconque des revendications 3 à 10, le premier tronçon placé en amont étant conçu sous la forme d'une structure réticulaire, le plus grand maillage du réseau étant plus petit que la plus petite section transversale cohérente libre du deuxième tronçon.
